# EUROPEAN PATENT APPLICATION

(11) **EP 2 722 321 A1**
(43) Date of publication of application: **23.04.2014**
(21) Application number: 12189325.9
(22) Date of filing: 19.10.2012
(51) Int. Cl.: C04B 41/72

(54) **Method for the prevention and/or removal of calcium silicate deposits**

(71) Applicant: Aldebaran Solutions B.V., 7161 MH Neede (NL)
(72) Inventor: Fischer, Hans, 7161 MH NEEDE (NL)
(74) Representative: Algemeen Octrooi- en Merkenbureau B.V.

(57) **Abstract**

The invention relates to a method for the prevention and/or removal of calcium silicate deposits, in particular from construction materials such as cement or concrete. The method uses an aqueous cleaning composition comprising a carboxylic acid such as acetic acid or lactic acid, optionally in addition of a foaming agent and a foaming stabilizer.

## Description

### FIELD OF THE INVENTION

The invention relates to a method for the prevention and/or removal of calcium silicate deposits.

### BACKGROUND OF THE INVENTION

Common building materials such as cement and concrete are based on calcium silicate. When such calcium silicate construction materials are used, typically a lot of dust from the material is generated. This occurs for instance when concrete constructions are mechanically shaped. In order to suppress dust formation, usually water is used in order to control the dust.

Unfortunately, a slurry of calcium silicates in water rapidly dries and hardens to form particles and layers that have are hard to remove. The calcium silicate deposits may attach to the surface of the construction as well as tools and bits present on the construction site, leading to additional cleaning work and often damage to the building as well as machines used on the site. Also water channels, air vents and other passages can be affected, leading to clogging and reduced functioning.

The calcium silicates are usually removed using mechanical cleaning ,which often leads to damage to surfaces. Sometimes mechanical cleaning is combined with strong chemical chemicals such as sulfuric acid, hydrochloric acid and/or nitric acid, which lead to additional hazards.

### OBJECT AND SUMMARY OF THE INVENTION

It is an object of the invention to provide an improved method to remove calcium silicate deposits such as cement or concrete.

The invention provides a method for the prevention and/or removal of calcium silicate deposits, comprising the steps of: a) processing of a construction material comprising calcium silicates, such as cement or concrete, resulting in undesired calcium silicate deposits such as cement and/or concrete dust deposits; b) providing an aqueous cleaning composition, c) applying the aqueous cleaning composition to the calcium silicates deposits, and d) removal of the mixture of aqueous cleaning composition and calcium silicates deposits, wherein the aqueous cleaning composition comprises at least one water-soluble carboxylic acid, and optionally other additives. The method using an aqueous solution of a carboxylic acid made it easier to remove the cement or concrete deposits after letting the solution soak into the particles, typically for a few minutes. The calcium silicate depots may for instance be spoilt drops or spattered masses or cakes of for instance cement or concrete, typically at least partially dried on a surface or a tool. Due to the easy of removal, the treated surface is less likely to be damaged by the cleaning process. Also, the non-toxic carboxylic acid is more environmentally friendly and less hazardous for users than for instance diluted strong acids. Mixtures of different carboxylic acids may be used.

Preferably, the aqueous cleaning composition has a pH in the range of 1-7. Mildly acidic carboxylic acid solutions gave excellent cleaning results. More preferably the aqueous solution is a buffered solution, which may be prepared by partially titrating an aqueous solution with a strong base such as sodium hydroxide.

Most preferably the aqueous solution has a pH in the range of 4-5. In this range, the cleaning composition retains good cleaning properties while reducing the risk for corrosive damage to metal surfaces, in particular to cast aluminum surfaces. For other common surfaces, such as stone, wood or resins, the more acidic solutions with pH below 4 can typically be used safely without risk for chemical damage.

In a preferred embodiment, the composition comprises from 0.1 to 10% w/w of carboxylic acid. This allows for any easy spreading of the carboxylic acid over the treated calcium silicates.

Suitable carboxylic acids are selected from the group consisting of formic acid, acetic acid, propionic acid, n-butanoic acid, 2-methylpropanoic acid,oxalic acid, citric acid, lactic acid and tartaric acid. However, some of the acids in this group maybe have an unfavorable smell that is unpleasant for users.

Alpha-hydroxy carboxylic acids are preferred over their alkylcarboxylic acid counterparts, as they tend to be less volatile and have a more acceptable smell. Most preferably, the carboxylic acid is lactic acid or citric acid, that allow for good cleaning abilities against cement and concrete, and have favorable environmental and smell properties.

It is preferred if the aqueous cleaning composition comprises a foaming agent. A foaming agent makes it easier to spread the solution over a surface to be treated. Compared to a regular composition, a foaming composition also makes it easier to retain the cleaning composition in a location to be treated, in order to let the composition soak into the concrete or cement particles that are to be removed. It was also observed improved cleaning was enabled compared to similar solutions without the foaming agent.

Suitable foaming agents include alkylbenzensulfonates, in particularsodium dodecylbenzenesulfonate. In addition to the foaming agent, additional components such as foam stabilizers may be added. Suitable foam stabilizers include cocoamide monoethanolamine, cocamide diethanolamine, hydroxymethylcellulose, hydroxyethylcellulose, xanthan gum, guar gum, locust bean gum, Beta-glucan, and glucomannan.

It is preferred if the aqueous cleaning composition comprises an antifungal agent. The addition of an antifungal preservative reduces the risk of the development of fungus during storage, and also reduces the development of fungus on treated surfaces. Suitable antifungal agents include sorbic acid and salts derived thereof, benzoic acid and salts derived thereof, calcium propionate, sodium nitrite, sulfur dioxide, sodium bisulfite, and potassium hydrogen sulfite.

The method is particularly useful in situations wherein the processing step a) comprises the cutting, sawing, shaping and/or polishing of the construction material, preferably wherein the construction material is cement and/or concrete which comprise a high percentage of calcium silicates.

Preferably, the aqueous cleaning composition is applied by spraying. Spraying is an effective way to spread the cleaning composition over a surface to be treated in a controlled manner, saving on the amount of cleaning composition to be used.

It is preferred if the aqueous cleaning composition is applied during the processing step. In this way, it becomes faster and easier to remove the calcium silicate deposits compared to treating and removing the deposits after the processing. In some processes, the cleaning solution as described herein may replace water that is often used in processing in order to control dust.

Preferably, the removal of the mixture of aqueous cleaning composition and calcium silicates particles is done before hardening of the mixture. Removal before hardening is more convenient than after hardening. Compared to plain water, the cleaning composition as described herein also elongates the drying time of the calcium silicate slurry, increasing the time window for fast and easy cleaning.

The method is most suitable for processes wherein the removal of the mixture of aqueous cleaning composition and calcium silicates particles is performed on metal surfaces of tools and/or machines used during the processing of the construction material. In particular cast aluminum surfaces may be susceptible to corrosion when in contact with acidic solutions. Tools and machines typically represent great value, and may become useless due to calcium silicate deposits. The cleaning compositions described herein are relatively mild compared to stronger acid solutions such as hydrochloric acid, sulfuric acid or nitric acid.

It is preferred if the removal of the mixture of aqueous cleaning composition and calcium silicates particles is performed in combination with mechanical cleaning. Thus the cleaning is faster and better cleaning results are obtained. Mechanical cleaning may involve techniques such as brushing, scrubbing and/or scraping. The mechanical energy needed for removing calcium silicate deposits was significantly less with the cleaning composition as described herein compared to for instance plain water.

### DESCRIPTION OF PREFERRED EMBODIMENTS

The invention will now be further elucidated by the following non-limiting examples.

### Example 1: Cleaning compositions

A number of exemplary cleaning compositions A,B C and D were prepared based on organic carboxylic acids, shown in Table I. The compositions were prepared by dissolving the ingredients in water. The pH was set by adding sodium hydroxide until the desired pH was reached.

**Table I Cleaning compositions**

| **% w/w** | **A** | **B** | **C** | **D** |
|---|---|---|---|---|
| Citric acid | 8 | - | 8 | - |
| Acetic acid | - | 5 | - | 5 |
| Sodium dodecylbenzenesulfonate | - | - | 2 | 2 |
| Xanthane gum | - | - | 1 | 1 |
| | | | | |
| water | >100% | >100% | >100% | >100% |
| pH | 4,5 | 4,5 | 4,5 | 4,5 |

Composition A is an aqueous solution of citric acid, composition B is diluted acetic acid. Composition C is a citric acid solution with added alkenebenzenesulfonates as a foam builder and xanthane gum as a foam stabilizer. Composition D is an acetic acid solution with alkenebenzenesulfonates as a foam builder and xanthane gum as a foam stabilizer. Similar compositions can be prepared using other water-soluble alkyl carboxylic acids. Optionally, antifungal agents may be added in order to improve storage life.

### Example 2: Comparative cleaning test

For the test, a basic concrete was prepared using Portland cement and sand in a 1:3 ratio mixed with water. The slurry was spattered on a aluminium metal sheet material and left to dry overnights. After that, different portions of the aluminium surface were treated with equal volumes of each of the solutions. The treated surfaces were left to soak for 5 minutes and then cleaned manually using a metal scrubber. The result was evaluated according to the relative cleaning time/ease of cleaning. Also, a qualitative analysis of corrosive damage to the metal sheet was performed visually. For comparison, diluted hydrochloric acid was used in a 0.1 M solution, and water was used as a control solution. Results are found in Table II.

**Table II: Relative ease of cleaning of different cleaning compositions and damage done to a cast aluminium surface.**

| **Composition** | **Ease of cleaning** | **Corrosive Damage** |
|---|---|---|
| A | ++ | - |
| B | ++ | - |
| C | +++ | - |
| D | +++ | - |
| water | - | + |
| HCl 0.1M | ++ | + |

The aluminium surface was very hard to clean with water alone. Due to the hard scrubbing, clearly visible damage was induced. The water compositions A and B both made cleaning significantly easier compared to water. However that the acetic acid composition had an unpleasant smell, which was significantly less for the citric acid solution. The corresponding foaming solutions C and D made it even easier to remove the concrete deposits compared to the non-foaming solutions. Damage to the surface was barely visible after cleaning. The foam also made it easier to spread the solution over the surface. Hydrochloric acid also eased the removal of concrete patches, but induced more significant corrosive damage. Also, the use of diluted strong acids such as hydrochloric acid, nitric acid and sulfuric acid is harmful to the environment and may cause hazards to users.

## Claims

1. Method for the prevention and/or removal of calcium silicate deposits, in particular from construction materials such as cement or concrete, comprising the steps of:
a) processing of a construction material comprising calcium silicates, such as cement or concrete, resulting in undesired calcium silicate deposits;
b) providing an aqueous cleaning composition,
c) applying the aqueous cleaning composition to the calcium silicates deposits, and
d) removal of the mixture of aqueous cleaning composition and calcium silicates deposits,
wherein the aqueous cleaning composition comprises at least one water soluble carboxylic acid, and optionally other additives.

2. Method according to claim 1, wherein the aqueous cleaning composition has a pH in the range of 1-7.

3. Method according to claim 1 or 2, wherein the composition has a pH in the range of 4-5..

4. Method according to any of the preceding claims, wherein the composition comprises from 0.1 to 10% w/w of carboxylic acid.

5. Method according to any of the preceding claims, wherein the carboxylic acid is selected from the group consisting of formic acid, acetic acid, propionic acid, n-butanoic acid, 2-methylpropanoic acid,oxalic acid, citric acid, lactic acid and tartaric acid.

6. Method according to claim 5, wherein the carboxylic acid is lactic acid or citric acid.

7. Method according any of the preceding claims, wherein the aqueous cleaning composition comprises a foaming agent.

8. Method according to claim 7, wherein the foaming agent comprises at least one alkylbenzenesulfonate.

9. Method according to claim 8, wherein the alkylbenzenesulfonate is a salt of dodecylbenzenesulfonate, in particular sodium dodecylbenzenesulfonate.

10. Method according to any of the claims 7-9, wherein the composition further comprises a foam stabilizer.

11. Method according to claim 10, wherein the foam stabilizer is selected from the group consisting of cocamide monoethanolamine, cocamide diethanolamine, hydroxymethylcellulose, hydroxyethylcellulose, xanthan gum, guar gum, locust bean gum, Beta-glucan, and glucomannan.

12. method according to any of the preceding claims, wherein the processing step a) comprises the cutting, sawing, shaping and/or polishing of the construction material.

13. Method according to any of the preceding claims, wherein the aqueous cleaning composition is applied by spraying.

14. Method according to any of the preceding claims, wherein the removal of the mixture of aqueous cleaning composition and calcium silicates particles is performed on metal surfaces of tools and/or machines used during the processing of the construction material.

15. Method according to any of the preceding claims, wherein the removal of the mixture of aqueous cleaning composition and calcium silicates particles is performed in combination with mechanical cleaning.
